# FASCICULE DE BREVET EUROPEEN

(11) **EP 4 097 002 B1**
(45) Date de publication et mention de la délivrance du brevet: **06.08.2025**
(21) Numéro de dépôt: 21706647.1
(22) Date de dépôt: 29.01.2021
(51) Int. Cl.: B64B 1/66, B64F 1/14, B64B 1/38

(54) **DISPOSITIF DE CONTROLE DE LA GARDE AU SOL D'UN DIRIGEABLE ET STATION D'ACCUEIL POUR DIRIGEABLE INTEGRANT UN TEL DISPOSITIF**
VORRICHTUNG ZUR STEUERUNG DES BODENABSTANDES EINES LUFTSCHIFFS SOWIE ANDOCKSTATION FÜR EIN LUFTSCHIFF MIT EINER SOLCHEN VORRICHTUNG
DEVICE FOR CONTROLLING THE GROUND CLEARANCE OF AN AIRSHIP AND DOCKING STATION FOR AN AIRSHIP INTEGRATING SUCH A DEVICE

(30) Priorité: 31.01.2020 FR 2001000
(43) Date de publication de la demande: 07.12.2022
(73) Titulaire: Flying Whales, 92150 Suresnes (FR)
(72) Inventeur: ORLIC, Yovan, 92150 SURESNES (FR); DULOU, Théo, 92150 SURESNES (FR)
(74) Mandataire: IP Trust
(86) Numéro de dépôt international: PCT/FR2021/050175
(87) Numéro de publication internationale: WO 2021/152275

(56) Documents cités:
- WO-A1-2018/099870
- WO-A2-2009/134928
- DE-B3- 102016 007 123
- FR-A1- 2 706 151
- FR-A1- 2 793 467
- US-A- 1 693 476
- US-A- 1 749 065
- US-A1- 2013 068 879

## Description

### Domaine technique

La présente invention concerne un dispositif de contrôle de la garde au sol d'un dirigeable.

La présente invention concerne une station d'accueil pour un dirigeable, notamment pour un ballon dirigeable à structure rigide. Elle vise également un procédé d'amarrage sécurisé d'un dirigeable, mettant en œuvre cette station d'accueil, ainsi qu'un dirigeable adapté pour cette amarrage sécurisé.

### État de la technique antérieure

Plusieurs solutions ont été conçues pour garantir la garde au sol d'un dirigeable amarré par son cône de nez et l'empêcher de toucher le sol, comme celle d'une roue placée sous la nacelle arrière du USS Los Angeles ou une roue lestée fixée par des câble à l'arrière des blimps Goodyear. Cependant, tout en empêchant le dirigeable soit de monter soit de descendre, ces systèmes n'empêchent pas le dirigeable de partir dans la direction opposée.

On connaît aussi le document brevet FR 2 706 151 qui divulgue un dispositif d'atterrissage et d'amarrage équipant un dirigeable. Le dispositif ne convient pas pour des dirigeables ne possédant pas de train d'atterrissage. En outre, le dispositif n'empêche pas le dirigeable de prendre une attitude à cabrer ou de toucher le sol avec son empennage.

Le document US1,749,065 divulgue un système pour accoster un dirigeable, comprenant un mât d'amarrage du nez du dirigeable et plusieurs chariots guidés sur des rails, chaque chariot comprenant une paire de bras mobiles entre une position horizontale et une position sensiblement verticale dans laquelle les extrémités de ces bras mobiles peuvent s'engager mécaniquement avec le dirigeable. Les chariots comportent des boggies dotés de roues guidées par des rails longitudinaux ou circulaires. La présente invention concerne un train d'atterrissage pour dirigeables rigides et a pour but de fournir une garde au sol à un dirigeable rigide amarré par l'avant à un mât bas ou tronqué. Lorsqu'il est amarré à un mât bas, le dirigeable doit pouvoir tourner autour dudit mât sans heurter le sol ni se mettre en chandelle. L'invention a pour but supplémentaire de supporter l'arrière du dirigeable rigide et de le laisser tourner autour du mât d'amarrage sans endommager la structure du dirigeable tout en limitant en outre l'angle de roulis.

### Exposé de l'invention

Un but de l'invention est notamment de remédier à tout ou partie des inconvénients précités.

Selon un premier aspect de l'invention, il est proposé un dispositif selon la revendication 1.

Les roues montées sur le châssis peuvent être des roues folles ou bien des roues dont l'orientation est contrôlable.

Le moyen d'approcher une extrémité distale d'un bras de l'ancrage latéral associé peut comporter un treuil disposé dans le dirigeable au niveau dudit ancrage latéral associé et un filin enroulé sur ledit treuil et passant par ledit ancrage latéral associé et ladite extrémité distale.

Suivant un autre aspect de l'invention, il est proposé une station d'accueil selon la revendication 5.

Le dispositif selon l'invention peut comporter une interface de liaison au sol agencée pour décrire un arc de cercle autour du mât d'amarrage lorsque l'ancrage en pointe du dirigeable est reçu dans le récepteur dudit mât d'amarrage et lorsque chacune des extrémités distales est fixée aux points d'ancrage latéral du dirigeable.

Suivant encore un autre aspect de l'invention, il est proposé un procédé selon la revendication 7.

Le procédé selon l'invention peut en outre comprendre , préalablement à l'étape de déploiement des bras, une étape pour dérouler à partir de chaque point d'ancrage latéral un câble dont une extrémité libre est prévue pour être fixée à une extrémité distale de chaque bras, et en ce que l'étape de déploiement comprend une étape pour enrouler lesdits câbles jusqu'à ce que les extrémités distales respectives de deux bras s'engagent mécaniquement dans les points d'ancrage latéral respectifs.

Le procédé selon l'invention peut en outre comprendre une étape pour incliner le dirigeable de sorte que la queue dudit dirigeable repose sur le dispositif de contrôle de garde selon l'invention.

Lorsque le procédé selon l'invention est mis en œuvre dans un dirigeable pourvu d'un système de ballast comprenant un première citerne à ballast situé à l'avant dudit dirigeable et une seconde citerne à ballast situé à l'arrière dudit dirigeable, l'étape d'inclinaison comprend une étape pour transférer de l'eau depuis ladite première citerne à ballast avant vers ladite seconde citerne à ballast arrière.

Suivant encore un autre aspect qui ne fait pas partie de l'invention, il est proposé un dirigeable comprenant un corps pourvu d'un nez et d'une doté de deux points d'ancrage latéral disposés de part et d'autre du corps dudit dirigeable, adapté pour être amarré à l'avant à un mât d'amarrage et à l'arrière à une station d'accueil selon l'invention, caractérisé en ce qu'il comprend en outre des moyens motorisés pour enrouler/dérouler deux câbles dont une extrémité proximale respective est reliée auxdits moyens motorisés.

Suivant encore un autre aspect de l'invention, il est proposé un ensemble selon la revendication 11.

### Description des figures

D'autres avantages et particularités de l'invention apparaîtront à la lecture de la description détaillée de mises en œuvre et de modes de réalisation nullement limitatifs, au regard de dessins annexés sur lesquels :
- la figure 1 illustre un premier mode de réalisation d'une station d'accueil pour dirigeable selon l'invention,
- la figure 2 illustre un dispositif de contrôle de la garde au sol d'un dirigeable dans une station d'accueil de la figure 1.

### Description de modes de réalisation

Les modes de réalisation décrits ci-après n'étant nullement limitatifs, on pourra notamment considérer des variantes de l'invention ne comprenant qu'une sélection de caractéristiques décrites, par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Sur les figures un élément apparaissant sur plusieurs figures conserve la même référence.

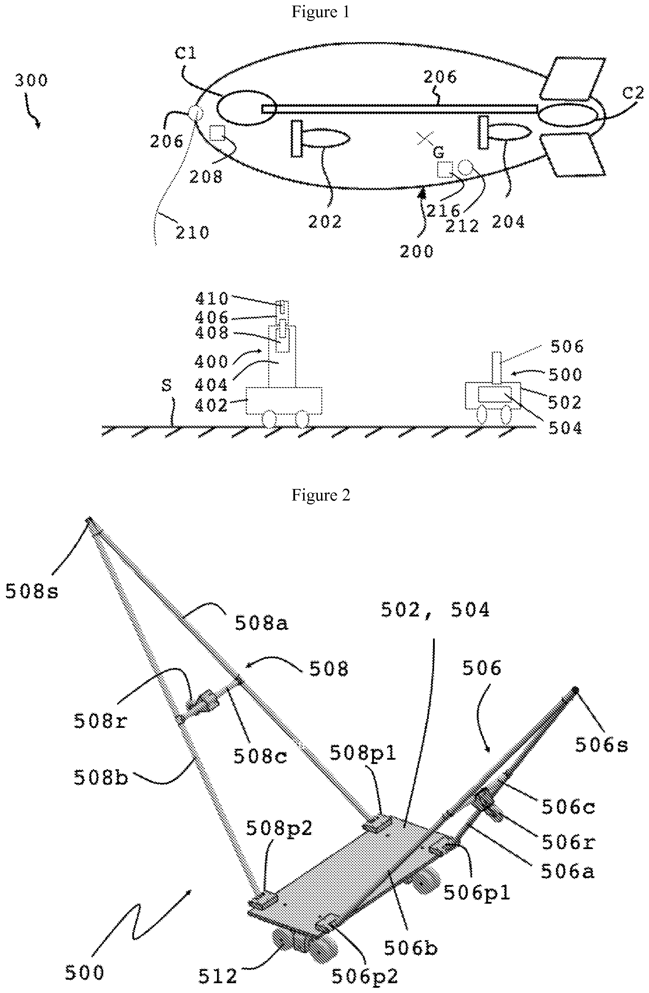

En référence à la figure 1, il est décrit un système 1, conforme à un mode de réalisation selon l'invention, d'amarrage d'un dirigeable 200 à une station d'accueil 300 conforme à un mode de réalisation de l'invention, et un sol ou une piste S, en même temps que le procédé mis en œuvre dans ce système.

Dans l'exemple représenté, le dirigeable 200 comporte des groupes propulseurs 202, 204.

Le dirigeable est en outre équipé de capacités C1 et C2, formant ballasts, et permettant la modification de la stabilité et/ou de l'assiette du dirigeable 200 par remplissage ou vidange des capacités à partir d'un circuit de ballastage 206.

Selon la direction longitudinale, la proue du dirigeable 200 est dite en avant tandis que la poupe du dirigeable est dite en arrière. Le dirigeable présente en outre un point d'ancrage en pointe 206, disposé au niveau de sa proue. Le dirigeable peut en outre être équipé d'un tambour 208 disposé au niveau de la proue qui enroule ou déroule un câble d'amarrage 210, présentant une extrémité libre, depuis ou vers la station d'accueil 300.

Le dirigeable présente un centre de gravité G.

Selon le mode de réalisation, le dirigeable 200 dispose en outre de deux points d'ancrage latéral 212, 214 (non représenté sur la figure) disposés dans un plan transversal à la direction longitudinale du dirigeable situé en arrière du centre de gravité G selon la direction longitudinale, symétriquement et de part et d'autre de son axe de lacet. Seul le point d'ancrage latéral bâbord 208 est représenté sur la figure.

La station d'accueil 300 peut comporter de manière connue un dispositif récepteur de proue 400, aussi appelée mât d'amarrage, doté d'une base 402, éventuellement automotrice, en appui sur le sol ou la piste S, et un pylône 404 au sommet duquel est disposé un treuil comportant un tambour d'enroulement 406 dont l'axe vertical est entraîné par un moteur 408. Le tambour 406 est pourvu d'une fente 410 agencée pour recevoir une extrémité libre du câble d'amarrage 210.

Lorsque le dirigeable 200 se trouve à l'approche du dispositif récepteur de proue 400, le pilote déclenche une procédure d'amarrage. Le tambour d'enroulement 208 du dirigeable est contrôlé en mode roue libre afin de libérer le câble en déroulement vers le sol. L'extrémité libre du câble est ensuite insérée dans la fente réceptrice 410 du tambour 406. Une fois prisonnier de la fente réceptrice, la distance entre le dirigeable et la fente, donc le sol S, est limitée par la longueur libre de câbles.

Inversement, lors d'une phase de décollage, l'extrémité du câble d'amarrage 210 est libérée, le tambour 406 étant contrôlé en roue libre tandis que le tambour d'enroulement 208 enroule le câble d'amarrage libéré.

Le système d'amarrage selon l'invention peut aussi être associé à un système de couplage mécanique du dirigeable au dispositif récepteur de proue, comme décrit dans la demande WO2018/099870 ici incorporée par référence.

Pour pouvoir stabiliser l'assiette du dirigeable, la station d'accueil 300 comporte en outre un dispositif de contrôle de la garde au sol 500, aussi appelée station de réception de queue d'aérostat. Le dispositif de contrôle de la garde au sol 500 est doté d'un châssis 502 sur lequel est fixé un poids 504.

Le dispositif 500 comporte en outre deux bras rigides 506, 508 (figure 2).

Chacun des bras 506, respectivement 508, présente une forme de A, formé de deux poutres principales, 506a et 506b, respectivement 508a et 508b, formant les branches latérales du A.

Les deux poutres principales, 506a et 506b, respectivement 508a et 508b, sont reliées entre elles en un sommet 506s, respectivement 508s, et reliées entre elles par une troisième poutre 506c, respectivement 508c, formant la branche horizontale du A.

Chacun des bras 506, respectivement 508, présente, deux extrémités proximales 506p1, 506p2, respectivement 508p1, 508p2, disposées au niveau du bas des deux branches latérales du A et articulées sur le châssis (502), l'extrémité distale du bras étant disposée au niveau du sommet 506s, respectivement 508s, du A, définissant ainsi un axe de rotation du bras sur le châssis selon la direction formée par les deux extrémités proximales.

La dispositif 500 comporte en outre une interface de liaison au sol 510. L'interface de liaison 510 comporte des roues 512 montées sur le châssis 502 dont l'orientation peut être modifiée, par exemple des roues dites folles, ou contrôlée, par exemple montées sur un train directionnel.

Dans l'exemple représenté, l'interface de liaison comporte en outre des roues folles 506r, respectivement 508r, montées sur la troisième poutre 506c, respectivement 508c. Les roues folles montées sur la poutre sont optionnelles.

Le dispositif 500 comporte en outre un moyen de déplacement (non représenté) de l'extrémité distale 506s, respectivement 508s, de chacun des bras 506, respectivement 508, vers l'ancrage latéral associé 212, 214 du dirigeable 200.

Le moyen de déplacement de déplacement peut comporter deux treuils 216, 218 (non représenté), chacun disposé dans le dirigeable 200 au niveau d'un ancrage latéral et un filin enroulé sur chacun des treuils et passant par l'ancrage latéral.

Selon une autre possibilité, il est prévu d'utiliser un drone tel que cela est décrit dans la demande internationale précitée.

Aussi, il est possible de commander, depuis le dirigeable 200, un moyen d'approcher l'extrémité distale d'un bras vers l'ancrage latéral associé du dirigeable et de fixer une extrémité libre du câble d'amarrage à la station d'accueil ou au dirigeable. La fixation peut être réalisée au moyen de mousqueton, ou d'un système d'attelage type Scharfenberg.

Pour la phase d'amarrage, deux câbles peuvent être libérés des ancrages latéraux arrière. Une équipe au sol fixe ces câbles à chaque extrémité des cadres « A » de l'atterrisseur du dispositif selon l'invention.

Les câbles sont ensuite à nouveau enroulés sur les treuils 216, 218 jusqu'aux points d'amarrage en soulevant les deux extrémités des cadres « A » jusqu'à ce qu'ils atteignent les points d'amarrage et soient verrouillés en position.

Le pilote peut ensuite mettre en œuvre une autre étape spécifique à l'invention comportant de déplacer le plus d'eau possible vers les citernes à ballast arrière, par exemple depuis la capacité C1 vers la capacité C2, ce qui permet au dirigeable de reposer sur l'atterrisseur arrière objet de l'invention. La capture peut alors être considérée comme réalisée et le dirigeable peut être laissé dans le vent, la queue reposant sur l'atterrisseur arrière.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

Le dirigeable pourrait par exemple disposer de plus trois points d'ancrages, avec par exemple un point de proue et 3 ou 4 points d'ancrage latéraux. Par conséquent, la station d'accueil pourrait disposer de plus de deux bras, par exemple 3 ou 4, ou encore disposer de bras présentant une extrémité distale attachée au dirigeable en plusieurs points.

## Revendications

1. Dispositif (500) de contrôle de la garde au sol d'un dirigeable (200) doté de deux points d'ancrage latéral (212), ledit dispositif de contrôle comportant :
- un châssis (502) comportant une interface de liaison au sol, sur lequel est fixé un poids (504),
- deux bras rigides (506, 508), chacun des bras présentant une extrémité, dite proximale, articulée sur le châssis et une extrémité, dite distale,
- un moyen de déplacer l'extrémité distale de chacun des bras entre une position, dite de retenue, dans laquelle chaque extrémité distale est prévue pour être en contact avec l'une desdites extrémités latérales d'ancrage du dirigeable, dite associée à ladite extrémité distale, et une position, dite déverrouillée, dans laquelle il n'y a pas de contact entre le dirigeable et le dispositif,
- des moyens de fixation, de manière amovible, dans la position de retenue, de l'extrémité distale respective de chacun des bras sur le point d'ancrage latéral respectif associé,
dans lequel l'interface de liaison au sol comporte des roues (512) montées sur le châssis et dont l'orientation est modifiable,
**caractérisé en ce que** chacun des bras (506, 508) présente une conformation en A formée de deux poutres principales (506a, 506b) formant les branches latérales du A, reliées entre elles en un sommet (506s, 508s) et reliées entre elles par une troisième poutre (506c, 508c) formant la branche horizontale du A, deux extrémités proximales (506p1, 506p2, 508p1, 508p2) d'un bras étant disposées au niveau du bas des deux branches latérales du A et articulées sur le châssis (502), l'extrémité distale du bras étant disposée au niveau du sommet du A, définissant ainsi un axe de rotation du bras sur le châssis selon la direction formée par les deux extrémités proximales, et **en ce que** les troisièmes poutres (506c, 508c) de chacun des bras (506, 508) sont équipées de roues (506r, 508r).

2. Dispositif selon la revendication précédente, dans lequel les roues (512) montées sur le châssis sont des roues folles.

3. Dispositif selon la revendication 1, dans lequel les roues (512) montées sur le châssis sont des roues dont l'orientation est contrôlable.

4. Dispositif selon l'une quelconque des revendications précédentes, dans lequel le moyen d'approcher une extrémité distale (506s,508s) d'un bras de l'ancrage latéral associé comporte un treuil prévu pour être disposé dans le dirigeable au niveau dudit ancrage latéral associé et un filin enroulé sur ledit treuil et passant par ledit ancrage latéral associé et ladite extrémité distale.

5. Station d'accueil (300) pour dirigeable (200) doté d'un point d'ancrage en pointe (206) et de deux points d'ancrage latéral (212) comportant :
- un mât d'amarrage (400) doté d'un récepteur agencé pour recevoir, ou être amarré, à l'ancrage en pointe du dirigeable,
- un dispositif de contrôle de la garde (500) selon l'une quelconque des revendications précédentes dont l'extrémité distale de chacun des bras est agencée pour être fixée de manière amovible sur chacun desdits deux points d'ancrage latéral.

6. Station d'accueil selon la revendication précédente, dans laquelle le dispositif selon l'invention comporte une interface de liaison au sol agencée pour décrire un arc de cercle autour du mât d'amarrage lorsque l'ancrage en pointe du dirigeable est reçu dans le récepteur dudit mât d'amarrage et lorsque chacune des extrémités distales est fixée aux points d'ancrage latéral du dirigeable.

7. Procédé de sécurisation de l'amarrage d'un dirigeable doté d'un point d'ancrage en pointe et de deux points d'ancrage latéral, sur un site, mettant en œuvre une station d'accueil selon l'une des deux revendications précédentes, comportant les étapes suivantes :
- un amarrage de la proue du dirigeable au mat de ladite station avec liberté de rotation du dirigeable autour dudit mat,
- un déplacement motorisé du dispositif de contrôle de la garde selon l'une quelconque des revendications 1 à 4 pour se placer sous la queue du dirigeable déjà amarré,
- un déploiement des deux bras jusqu'à atteindre les points d'ancrage latéral, et
- une fixation des extrémités distales des deux bras aux points d'ancrage respectifs.

8. Procédé selon la revendication précédente, comprenant en outre, préalablement à l'étape de déploiement des bras, une étape pour dérouler à partir de chaque point d'ancrage latéral un câble dont une extrémité libre est prévue pour être fixée à une extrémité distale de chaque bras, et en ce que l'étape de déploiement comprend une étape pour enrouler lesdits câbles jusqu'à ce que les extrémités distales respectives de deux bras s'engagent mécaniquement dans les points d'ancrage latéral respectifs.

9. Procédé selon la revendication précédente, comportant en outre une étape pour incliner le dirigeable de sorte que la queue dudit dirigeable repose sur le dispositif de contrôle de la garde selon l'une quelconque des revendications 1 à 4.

10. Procédé selon la revendication précédente, mis en œuvre dans un dirigeable pour vu d'un système de ballast comprenant une première citerne à ballast située à l'avant dudit dirigeable et une seconde citerne à ballast située à l'arrière dudit dirigeable, dans lequel l'étape d'inclinaison comprend une étape pour transférer de l'eau depuis ladite première citerne à ballast avant vers ladite seconde citerne à ballast arrière.

11. Ensemble comprenant une station d'accueil (300) selon l'une des revendications 5 ou 6 et un dirigeable (200), le dirigeable comprenant un corps pourvu d'un nez et de deux points d'ancrage (212) latéral disposés de part et d'autre du corps dudit dirigeable, le dirigeable étant adapté à être amarré à l'avant au mât d'amarrage et à l'arrière au dispositif de contrôle de la garde

## Patentansprüche

1. Vorrichtung (500) zum Steuern der Bodenfreiheit eines Luftschiffs (200), das mit zwei seitlichen Verankerungspunkten (212) versehen ist, die Steuervorrichtung aufweisend:
- ein Fahrgestell (502), aufweisend eine Bodenverbindungsschnittstelle, an dem ein Gewicht (504) festgemacht ist,
- zwei starre Arme (506, 508), wobei jeder der Arme ein sogenanntes proximales Ende, das an dem Fahrgestell angelenkt ist, und ein sogenanntes distales Ende vorweist,
- ein Mittel zum Bewegen des distalen Endes jedes der Arme zwischen einer sogenannten Halteposition, in der jedes distale Ende dafür vorgesehen ist, mit einem der seitlichen Enden der Verankerung des Luftschiffs in Kontakt zu stehen, die als dem distalen Ende zugeordnet bezeichnet wird, und einer sogenannten Entriegelungsposition, in der zwischen dem Luftschiff und der Vorrichtung kein Kontakt besteht,
- Mittel zum lösbaren Festmachen des jeweiligen distalen Endes jedes der Arme in der Halteposition an dem jeweils zugehörigen seitlichen Verankerungspunkt,
wobei die Bodenverbindungsschnittstelle Räder (512) aufweist, die an dem Fahrgestell montiert sind und deren Ausrichtung modifizierbar ist,
**dadurch gekennzeichnet, dass** jeder der Arme (506, 508) eine A-förmige Gestalt, die aus zwei Hauptträgern (506a, 506b) ausgebildet ist, die die seitlichen Zweige des A ausbilden, die an einem Scheitelpunkt (506s, 508s) miteinander verbunden sind und durch einen dritten Träger (506c, 508c) miteinander verbunden sind, der den horizontalen Zweig des A ausbildet, wobei zwei proximale Enden (506p1, 506p2, 508p1, 508p2) eines Arms an dem unteren Ende der zwei seitlichen Zweige des A angeordnet und an dem Fahrgestell (502) angelenkt sind, wobei das distale Ende des Arms an dem Scheitelpunkt des A angeordnet ist, wobei so eine Drehachse des Arms an dem Fahrgestell in der Richtung durch die zwei proximalen Enden definiert wird, und dass die dritten Träger (506c, 508c) jedes der Arme (506, 508) mit Rädern (506r, 508r) versehen sind.

2. Vorrichtung nach dem vorstehenden Anspruch, wobei die Räder (512), die an dem Fahrgestell montiert sind, Zwischenräder sind.

3. Vorrichtung nach Anspruch 1, wobei die Räder (512), die an dem Fahrgestell montiert sind, Räder sind, deren Ausrichtung steuerbar ist.

4. Vorrichtung nach einem der vorstehenden Ansprüche, wobei das Mittel zum Annähern eines distalen Endes (506s, 508s) eines Arms an die zugehörige seitliche Verankerung eine Winde umfasst, die dafür vorgesehen ist, in dem Luftschiff an der zugehörigen seitlichen Verankerung angeordnet zu werden, und ein Seil, das auf die Winde gewickelt ist und durch die zugehörige seitliche Verankerung und das distale Ende verläuft.

5. Dockingstation (300) für ein Luftschiff (200), das mit einem Spitzenverankerungspunkt (206) und zwei seitlichen Verankerungspunkten (212) versehen ist, aufweisend:
- einen Befestigungsmast (400), der mit einer Aufnahme versehen ist, die zum Aufnehmen der Spitzenverankerung des Luftschiffs oder Befestigtwerden mit dieser eingerichtet ist,
- eine Bodenfreiheitsteuervorrichtung (500) nach einem der vorstehenden Ansprüche, wobei das distale Ende jedes der Arme eingerichtet ist, um an jedem der zwei seitlichen Verankerungspunkte abnehmbar festgemacht zu werden.

6. Dockingstation nach dem vorstehenden Anspruch, wobei die erfindungsgemäße Vorrichtung eine Bodenverbindungsschnittstelle aufweist, die eingerichtet ist, um einen Kreisbogen um den Befestigungsmast zu beschreiben, wenn die Spitzenverankerung des Luftschiffs in der Aufnahme des Befestigungsmasts aufgenommen ist und wenn jedes der distalen Enden an den seitlichen Verankerungspunkten des Luftschiffs festgemacht ist.

7. Verfahren zum Sichern der Befestigung eines Luftschiffs, das mit einem Spitzenverankerungspunkt und zwei seitlichen Verankerungspunkten ausgestattet ist, das eine Andockstation nach einem der zwei vorstehenden Ansprüche umsetzt, aufweisend die folgenden Schritte:
- Befestigen des Bugs des Luftschiffs an dem Mast der Station mit Drehfreiheit des Luftschiffs um den Mast,
- motorisiertes Bewegen der Bodenfreiheitsteuervorrichtung nach einem der Ansprüche 1 bis 4, um sich unter dem Heck des bereits befestigten Luftschiffs zu platzieren,
- Ausfahren der zwei Arme bis zu dem Erreichen der seitlichen Verankerungspunkte und
- Festmachen der distalen Enden der zwei Arme an den jeweiligen Verankerungspunkten.

8. Verfahren nach dem vorstehenden Anspruch, ferner umfassend, vor dem Schritt zum Ausfahren der Arme, einen Schritt zum Abwickeln eines Kabels von jedem seitlichen Verankerungspunkt, wobei ein freies Ende davon vorgesehen ist, an einem distalen Ende jedes Arms festgemacht zu werden, und dass der Ausfahrschritt einen Schritt zum Aufwickeln der Kabel umfasst, bis die jeweiligen distalen Enden von zwei Armen mechanisch in die jeweiligen seitlichen Verankerungspunkte eingreifen.

9. Verfahren nach dem vorstehenden Anspruch, ferner aufweisend einen Schritt zum Neigen des Luftschiffs, so dass das Heck des Luftschiffs auf der Bodenfreiheitsteuervorrichtung nach einem der Ansprüche 1 bis 4 ruht.

10. Verfahren nach dem vorstehenden Anspruch, das in einem Luftschiff implementiert wird, das über ein Ballastsystem verfügt, umfassend einen ersten Behälter, der sich an der Vorderseite des Luftschiffs befindet, und einen zweiten Behälter an der Rückseite des Luftschiffs, wobei der Neigeschritt einen Schritt zum Übertragen von Wasser aus dem ersten vorderen Behälter in den zweiten hinteren Behälter umfasst.

11. Anordnung, umfassend eine Dockingstation (300) nach einem der Ansprüche 5 oder 6 und ein Luftschiff (200), das Luftschiff umfassend einen Rumpf, der mit einer Nase und zwei seitlichen Verankerungspunkten (212) versehen ist, die auf beiden Seiten des Rumpfs des Luftschiffs angeordnet sind, wobei das Luftschiff geeignet ist, an der Vorderseite des Befestigungsmasts und an der Hinterseite der Bodenfreiheitsteuervorrichtung befestigt zu werden.

## Claims

1. Device (500) for controlling the ground clearance of an airship (200) equipped with two lateral anchoring points (212), said control device comprising:
- a frame (502) comprising a ground connection interface, on which a weight (504) is fixed,
- two rigid arms (506, 508), each of the arms having a so-called proximal end articulated on the frame and a so-called distal end,
- a means for moving the distal end of each of the arms between a so-called retention position, in which each distal end is intended to be in contact with one of said lateral anchoring ends of the airship, said to be associated with said distal end, and a so-called unlocked position, in which there is no contact between the airship and the device,
- means for detachably fixing, in the retention position, the relevant distal end of each of the arms on the associated relevant lateral anchoring point,
the ground connection interface comprising wheels (512) mounted on the frame and the orientation of which can be modified,
**characterized in that** each of the arms (506, 508) has an A-shaped configuration formed by two main beams (506a, 506b) forming the lateral branches of the A, connected together at a vertex (506s, 508s) and connected together by a third beam (506c, 508c) forming the horizontal branch of the A, two proximal ends (506p1, 506p2, 508p1, 508p2) of an arm being arranged at the bottom of the two lateral branches of the A and articulated on the frame (502), the distal end of the arm being arranged at the vertex of the A, thus defining an axis of rotation of the arm on the frame in the direction formed by the two proximal ends, **and in that** the third beams (506c, 508c) of each of the arms (506, 508) are equipped with wheels (506r, 508r).

2. Device according to the preceding claim, wherein the wheels (512) mounted on the frame are idler wheels.

3. Device according to claim 1, wherein the wheels (512) mounted on the frame are wheels of which the orientation is controllable.

4. Device according to any of the preceding claims, wherein the means for bringing a distal end (506s,508s) of an arm closer to the associated lateral anchor comprises a winch intended to be arranged in the airship at said associated lateral anchor and a rope wound on said winch and passing through said associated lateral anchor and said distal end.

5. Docking station (300) for an airship (200) equipped with a pointed anchoring point (206) and two lateral anchoring points (212), comprising:
- a mooring mast (400) equipped with a receiver arranged to receive, or be moored at, the pointed anchor of the airship,
- a clearance control device (500) according to any of the preceding claims, of which the distal end of each of the arms is arranged to be detachably fixed to each of said two lateral anchoring points.

6. Docking station according to the preceding claim, wherein the device according to the invention comprises a ground connection interface arranged to describe an arc of a circle around the mooring mast when the pointed anchor of the airship is received in the receiver of said mooring mast and when each of the distal ends is fixed to the lateral anchoring points of the airship.

7. Method for securing the mooring of an airship equipped with a pointed anchoring point and two lateral anchoring points, on a site, implementing a docking station according to one of the two preceding claims, comprising the following steps:
- mooring the bow of the airship to the mast of said station with freedom of rotation of the airship about said mast,
- motorized movement of the clearance control device according to any of claims 1 to 4 to position itself under the tail of the airship already moored,
- deploying the two arms until reaching the lateral anchoring points, and
- fixing the distal ends of the two arms to the respective anchoring points.

8. Method according to the preceding claim, further comprising, prior to the step of deploying the arms, a step for unwinding a cable from each lateral anchoring point, one free end of which cable is intended to be fixed to a distal end of each arm, and in that the deploying step comprises a step for winding up said cables until the respective distal ends of two arms mechanically engage in the respective lateral anchoring points.

9. Method according to the preceding claim, further comprising a step for tilting the airship so that the tail of said airship rests on the clearance control device according to any of claims 1 to 4.

10. Method according to the preceding claim, implemented in an airship provided with a ballast system comprising a first ballast tank located at the front of said airship and a second ballast tank located at the rear of said airship, wherein the tilting step comprises a step for transferring water from said first front ballast tank to said second rear ballast tank.

11. Assembly comprising a docking station (300) according to one of claims 5 or 6 and an airship (200), the airship comprising a body provided with a nose and two lateral anchoring points (212) arranged on either side of the body of said airship, the airship being adapted to be moored at the front to the mooring mast and at the rear to the clearance control device.
